# EUROPÄISCHE PATENTANMELDUNG

(11) **EP 1 475 870 A2**
(43) Veröffentlichungstag der Anmeldung: **10.11.2004**
(21) Anmeldenummer: 04405278.5
(22) Anmeldetag: 04.05.2004
(51) Int. Cl.: H02G 3/04, H02G 3/12

(54) **Verfahren zur Herstellung und/oder Installation einer elektrischen Einrichtung sowie elektrische Einrichtung und Halter für eine solche**

(30) Priorität: 05.05.2003 CH 7842003
(71) Anmelder: Regent Beleuchtungskörper AG, 4018 Basel (CH)
(72) Erfinder: Hess, Jean-Marc, 4142 Münchenstein (CH)
(74) Vertreter: Eder, Carl E.

(57) **Zusammenfassung**

Bei der Herstellung und/oder Installation einer elektrischen Einrichtung, insbesondere einer Lichtband-Leuchteinrichtung, werden isolierte elektrische Leiter (17) in einen unten eine Längsöffnung aufweisenden Kanal (5) eingebracht. Ferner wird in der Nähe von jedem der beiden Kanalenden (5a) ein Spann-Halter (27) in den Kanal (5) eingesetzt. Die beiden Spann-Halter (27) werden gegen ein Herausfallen durch die Längsöffnung (5c) und mindestens noch gegen zueinander hin gerichtete Verschiebungen gesichert. Ferner werden die Leiter (1) mit den beiden Spann-Haltern (27) verbunden und zwischen diesen gespannt. Wenn der Kanal (5) eine grosse Länge hat, können zwischen den beiden Spann-Haltern (27) noch die Leiter (17) abstützender Stütz-Halter in den Kanal (5) eingesetzt werden. Die beiden Spann-Halter (27) ermöglichen, die Leiter (17) mit einer geringen Anzahl Halter (25, 27) im Kanal (5) zu halten.

## Beschreibung

Die Erfindung betrifft ein Verfahren zur Herstellung und/oder Installation einer elektrischen Einrichtung gemäss dem Oberbegriff des Anspruchs 1. Die Erfindung betrifft ferner eine elektrische Einrichtung gemäss dem Oberbegriff des Anspruchs 8.

Die elektrische Einrichtung kann insbesondere einen fest oder pendelnden an einer Decke eines Raumes gehaltenen Kanal aufweisen, der auf seiner unteren Seite eine Längsöffnung hat und isolierte elektrische Leiter enthält. Der Kanal kann zum Beispiel zu einer Lichtband-Leuchteinrichtung gehören und eine Reihe am Kanal befestigter und elektrisch leitend mit den Leitern verbundener Leuchtvorrichtungen oder Leuchteinheiten tragen, von denen jede mindestens eine elektrische Lampe, wie eine röhrenförmige Leuchtstofflampe, aufweist. Der Kanal kann jedoch zusätzlich zu Leuchtvorrichtungen oder anstelle von solchen auch andere elektrische Vorrichtungen, beispielsweise Steckdosen, halten. Der Kanal kann beispielsweise in einem grossen Raum, wie einem Grossraumbüro, einer Werkhalle oder dergleichen, installiert werden und dann typischerweise etwa 5 m bis 50 m lang sein. Die Einrichtung weist ferner Halter auf, welche die Leiter bereits vor und während der Befestigung der Leuchtvorrichtungen und/oder sonstigen elektrischen Vorrichtungen am Kanal in diesem halten.

Es ist bei Lichtband-Leuchteinrichtungen bekannt, die Leiter mit Haltern im Kanal zu halten, die aus einem metallischen federnden Bügel mit einem Steg und zwei von diesen weg nach unten angewinkelten Schenkeln bestehen. Beim Installieren einer bekannten Einrichtung werden die Leiter provisorisch an einem Ende des an der Decke eines Raums montierten Kanals fixiert und dann entlang dem Kanal in diesen eingebracht. Dabei werden sukzessive Halter unter den Leitern in den Kanal eingesetzt, so dass sie die Leiter abstützen. Die Leiter liegen dann frei verschiebbar auf den Stegen der Halter auf. Danach werden die Leuchtvorrichtungen am Kanal befestigt und elektrisch leitend mit den Leitern verbunden. Ferner werden die einen Enden der im Kanal angeordneten Leiter durch Einführen in eine isolierende End-Klemme oder mit irgendwelchen anderen Isoliermitteln elektrisch isoliert und die anderen Enden der Leiter mit Strom-Zuleitungen verbunden.

Damit die Leiter bei der Verwendung der genannten, bekannten Halter vor dem Montieren der Leuchtvorrichtungen an einem Kanal nicht infolge ihres Gewichts aus dem Kanal herausfallen oder allzu weit nach unten hängen, müssen die Halter in relativ kleinen, beispielsweise etwa 50 cm betragenden Abständen angeordnet werden. Bei einem langen Kanal müssen dementsprechend sehr viele Halter in den Kanal eingesetzt werden. Da der Kanal beim Einsetzen der Leiter und Halter ja an der Decke eines Raumes gehalten ist, wird das Bereitstellen und Einsetzen der Vielzahl von Haltern aufwändig sowie zeitraubend. Wie erwähnt, müssen die Leiter zudem an einem Ende noch durch zusätzliche Isoliermittel isoliert werden, was den Aufwand für die Installation der Leiter noch vergrössert. Die Herstellung und Installation der bekannten Einrichtungen sind dementsprechend teuer.

Aus de CH 442 469 A bekannten Leuchteinrichtungen besitzen einen Kanal, der aus einer Reihe von Kanalstücken zusammengesetzt ist. Jedes Kanalstück enthält elektrische Leiter. Diese sind bei den Stossstellen der Kanalstücke über Verbindungselemente und Verbindungsleiter mit den Leitern des jeweils benachbarten Kanalstücks verbunden. Die Verbindungselemente sind offenbar an den Kanalstücken befestigt - nämlich vermutlich angeschraubt - und weisen vermutlich Verbindungsklemmen mit Klemmschrauben auf. Zur Herstellung einer solchen Leuchteinrichtung müssen daher an beiden Enden jedes Kanalstücks Verbindungselemente befestigt und mit den im betreffenden Kanalstück angeordneten, durchgehenden Leitern und den Verbindungsleitern verbunden werden. Die Herstellung und Installation einer derartigen Leuchteinrichtung ist daher mühsam, zeitraubend und kostspielig.

Eine aus der FR 1 398 249 A bekannte Einrichtung besitzt eine zum Beispiel an einer Decke befestigte Schiene mit einem oberen und einem unteren Kanal. Im letzteren ist eine elektrisch isolierende Leiste befestigt. Diese hat Lippen zum Festklemmen von zwei elektrischen Leitern. An der Schiene kann beispielsweise eine Leuchte befestigt und über Kontaktfinger eines Steckers elektrisch leitend mit den offenbar blanken Leitern verbunden werden. Diese Einrichtung hat den Nachteil, dass die Leiter entlang dem ganzen benötigten Teil der Schiene in die bei den Lippen vorhandenen Rinnen eingelegt werden müssen. Dies ist wiederum mühsam, zeitraubend und teuer. Zudem vergrössern die von den Lippen gehaltenen, offenbar über ihre ganze Länge blanken Leiter die Gefahr von Kurzschlüssen und - bei ausreichend hohen elektrischen Spannungen - von Unfällen.

Die DE 101 40 707 A offenbart eine Einrichtung mit einem Kanal, der einen metallischen Profilstab mit angeformten Haltevorsprüngen aufweist. Bei diesen können Leiter eingeklemmt werden. Diese können über Anschlussklemmen mit Leuchten und anderen Stromverbrauchern verbunden werden. Diese Einrichtung hat ähnlich wie die aus der FR 1 398 249 A bekannten Einrichtung den Nachteil, dass es mühsam, zeitraubend und teuer ist, die Leiter im Wesentlichen entlang der ganzen Länge des Kanals in die bei den Haltevorsprüngen vorhandene Rinnen einzuklemmen. Des Weiteren ist es wahrscheinlich auch ziemlich mühsam sowie kompliziert, die eingeklemmten Leiter mit den Anschlussklemmen zum Anschliessen von Leuchten zu verbinden. Zudem ist das Montieren von Anschlussklemmen und das Verbinden von diesen mit entlang dem Kanal in diesem verlaufenden Leitern möglicherweise nur an vorgegebenen, besonders ausgebildeten Stellen des Kanals möglich.

Die Erfindung liegt die Aufgabe zugrunde, ein Verfahren zur Herstellung und/oder Installation einer elektrischen Einrichtung der genannten Art sowie eine Einrichtung zu schaffen, die Nachteile der bekannten Verfahren und Einrichtungen beheben. Das Verfahren und die Einrichtung sollen dabei insbesondere ermöglichen, die Leiter einfach und schnell in den Kanal einzubringen und mit möglichst wenigen Haltern ausreichend in diesem zu halten, damit sie nicht aus dem Kanal herausfallen und nicht oder möglichst wenig aus dem Kanal heraushängen. Ferner sollen die Leiter vorzugsweise an nahezu jeder beliebigen Stelle des Kanals schnell und einfach mit einer Abzweig-Leitung verbindbar sein.

Die Aufgabe wird gemäss der Erfindung durch ein Verfahren mit den Merkmalen des Anspruchs 1 und durch eine elektrische Einrichtung mit den Merkmalen des Anspruchs 9 gelöst.

Die Erfindung betrifft ferner einen Halter für die elektrische Einrichtung, wobei der Halter gemäss der Erfindung die Merkmale des Anspruchs 10 aufweist.

Vorteilhafte Weiterbildungen des Verfahrens gehen aus den abhängigen Ansprüchen hervor.

Der Erfindungsgegenstand wird anschliessend anhand eines Ausführungsbeispiels einer in der Zeichnung dargestellten elektrischen Einrichtung erläutert. In der Zeichnung zeigt
Fig. 1 eine Seitenansicht einer elektrischen Lichtband-Leuchteinrichtung, mit einem Trag-Kanal,
Fig. 2 einen Längsschnitt durch den linken, ersten Endabschnitt des Trag-Kanals,
Fig. 3 einen Längsschnitt durch den rechten, zweiten Endabschnitt des Kanals,
Fig. 4 einen Querschnitt entlang der Linie IV - IV der Fig. 2 durch den linken, ersten Endabschnitt des Kanals,
Fig. 5 einen Querschnitt entlang der Linie V - V der Fig. 3 durch den rechten, zweiten Endabschnitt des Kanals,
Fig. 6 eine Ansicht eines Spann-Halters der Lichtband-Leuchteinrichtung mit Blickrichtung von schräg unten,
Fig. 7 eine Draufsicht des Spann-Halters,
Fig. 8 eine Ansicht des Spann-Halters mit Blickrichtung von schräg oben,
Fig. 9 einen in Fig. 4 mit IX bezeichneten Ausschnitt eines Spann-Halters, in grösserem Massstab,
Fig. 10 einen in Fig. 5 mit X bezeichneten Ausschnitt eines Spann-Halters, in grösserem Massstab,
Fig. 11 einen in Fig. 7 mit XI bezeichneten Ausschnitt eines Spann-Halters, in grösserem Massstab,
Fig. 12 einen in Fig. 7 mit XII bezeichneten Ausschnitt eines Spann-Halters, in grösserem Massstab, und
Fig. 13 eine Schrägansicht eines Sicherungselements der Lichtband-Leuchteinrichtung.

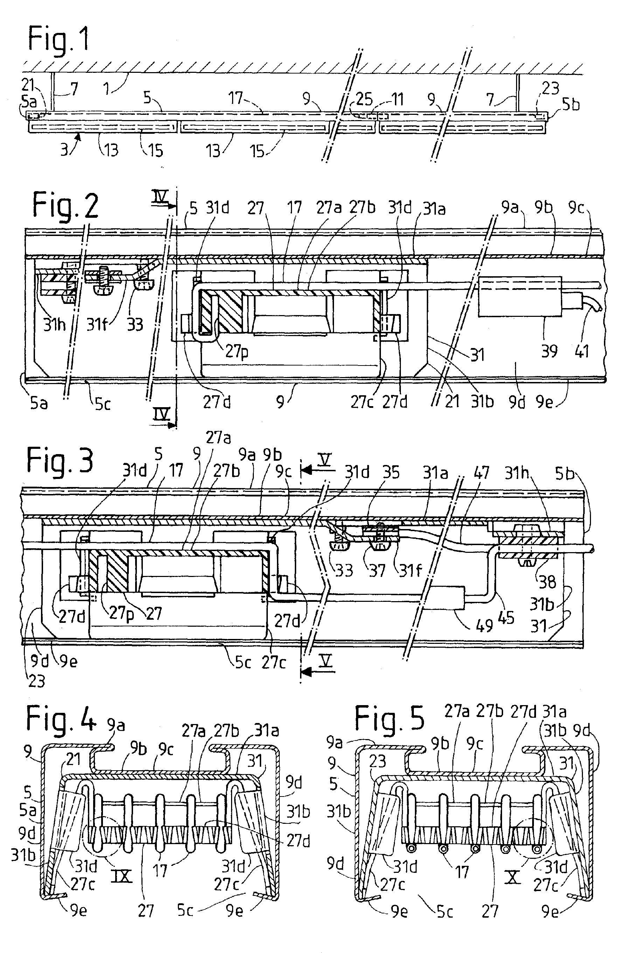

In Fig. 1 sind eine Decke 1 eines Raums und eine an einer Decke gehaltene, elektrische Einrichtung 3, nämlich eine elektrische Lichtband-Leuchteinrichtung 3 ersichtlich. Diese weist einen Trag-Kanal 5 mit einem sich links befindenden, ersten Kanalende 5a und einem sich rechts befindenden, zweiten Kanalende 5b auf. Der Trag-Kanal 5 ist beispielsweise mit mindestens teilweise flexiblen oder je mindestens ein Gelenk aufweisenden Aufhängeorganen 7 in Abstand von der Decke 1 pendelnd an dieser aufgehängt, könnte jedoch stattdessen unmittelbar an der Decke anliegen und mit Befestigungsmitteln unbeweglich an dieser befestigt sein. Der Trag-Kanal 5 ist ungefähr horizontal, weist mindestens einen metallischen Profilstab 9 auf und ist normalerweise aus zwei oder mehr Profilstäben 9 zusammengesetzt, die miteinander fluchten, bei Enden paarweise mindestens annähernd aneinander anstossen und dort jeweils mit einem Verbindungsstück 11 fest miteinander verbunden sind. Das bzw. jedes Verbindungsstück 11 ragt in die Innenräume der beiden durch das Verbindungsstück miteinander verbundenen Profilstäbe 9 hinein und ist beispielsweise mit Schrauben mit diesen verschraubt.

Der das erste Kanalende 5a bildende, erste Endabschnitt des Kanals 5 und die erste Haltevorrichtung 21 sind auch in den Figuren 2 und 4 ersichtlich. Der das zweite Kanalende 5b bildende, zweite Endabschnitt des Kanals 5 und die zweite Haltevorrichtung 23 sind auch in den Figuren 3 und 5 ersichtlich. Der bzw. jeder metallische Profilstab 9 des Kanals 5 hat auf seiner oberen Seite eine Deckwand 9a, die im Querschnitt im mittleren Bereich mit einer rinnenförmigen, Vertiefung 9b versehen ist. Die Vertiefung 9b hat einen ebenen, horizontalen Grund 9c. Der bzw. jeder Profilstab 9 hat auf beiden Seiten der Deckwand 9a eine mit dieser zusammenhängende, von dieser weg vertikal nach unten ragende Seitenwand 9d. Die beiden Seitenwände 9d hängen bei ihren unteren Längsrändern mit nach innen zueinander hin ragenden Flanschen 9e zusammen, die beispielsweise von den Seitenwänden weg leicht nach oben geneigt und/oder ungefähr horizontal sind. Die einander zugewandten Längsränder der beiden Flansche 9e begrenzen zusammen eine sie auf der unteren Seite des Kanals 5 befindende Längsöffnung 5c des Kanals.

Der Trag-Kanal 5 trägt eine Reihe an seiner Unterseite befestigter, elektrischer Leuchtvorrichtungen 13 oder Leuchteinheiten 13, von denen jede ein Gehäuse und mindestens eine elektrische Lampe 15, nämlich zum Beispiel mindestens eine röhrenförmige Leuchtstofflampe 15, aufweist. Dabei besitzt jede Leuchtvorrichtung meistens zwei oder noch mehr nebeneinander angeordnete und eventuell auch in der Längsrichtung des Kanals nacheinander angeordnete Lampen.

Der Kanal 5 enthält einige isolierte elektrische Leiter 17, von denen sich jeder unterbruchslos mindestens annähernd entlang der ganzen Länge des Kanals 5 erstreckt. Die Leiter 13 sind einadrig und weisen also je nur einen einzigen metallischen, elektrisch leitenden Kern und einen diesen im Querschnitt umschliessenden, elektrisch isolierenden Mantel auf. Der Kern besteht vorzugsweise aus einem Draht mit vollem Querschnitt, könnte aber eventuell auch aus einer Litze mit einem Bündel Metallfasern bestehen. Der Kanal ist mit Haltemitteln versehen, um die Leiter 17 im Kanal zu halten. Die Haltemittel weisen zwei in dem Kanal 5 eingesetzte Spann-Haltevorrichtungen 21 und 23 auf, von denen sich die eine, erste Spann-Haltevorrichtung 21 in der Nähe des ersten Kanalendes 5a und die andere, zweite Spann-Haltevorrichtung 23 in der Nähe des zweiten Kanalendes 5b befindet. Wenn der Kanal länger als etwa 5 m bis 10 m ist, können die Haltemittel zwischen den beiden Spann-Haltevorrichtungen 21 und 23 noch einen oder mehrere Stütz-Halter 25 aufweisen.

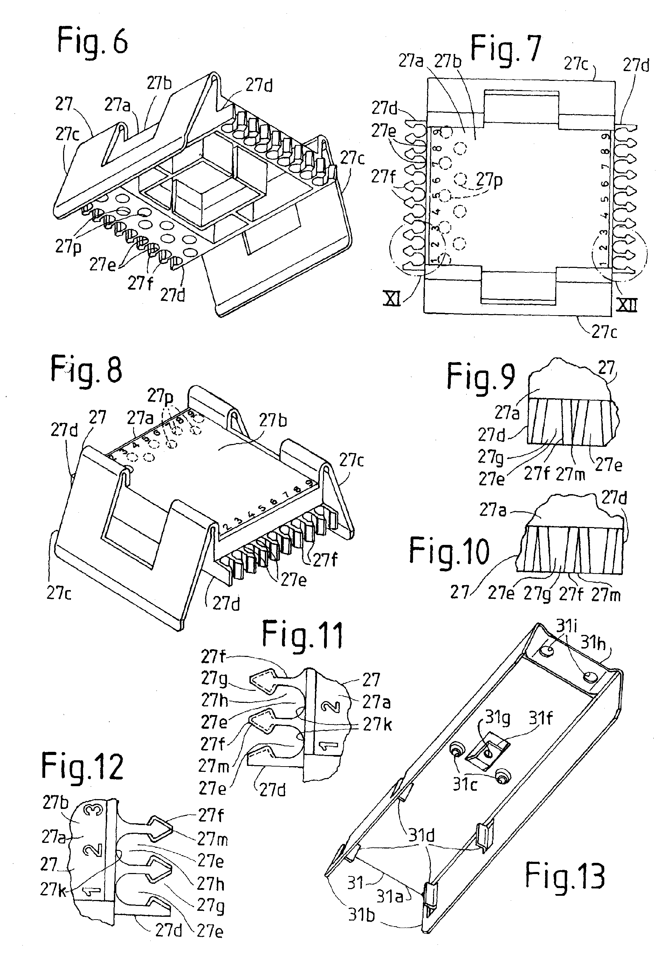

Die erste Spann-Haltevorrichtung 21 besitzt einen ersten Spann-Halter 27. Die zweite Spann-Haltevorrichtung 23 besitzt einen ebenfalls mit 27 bezeichneten, zweiten Spann-Halter. Die beiden Spann-Halter 27 sind beispielsweise identisch ausgebildet und bestehen je aus einem einstückigen Körper aus elektrisch isolierendem Kunststoff. Einer der Spann-Halter 27 ist separat in den Figuren 6, 7 und 8 dargestellt. Ferner zeigen die Figuren 9, 10, 11, 12 Details der beiden Spann-Halter 27. Jeder Spann-Halter 27 hat im Grundriss im mittleren Bereich einen Auflageabschnitt 27a mit einer viereckförmigen Platte, die oben eine ebene Auflagefläche 27b aufweist und unten mit einigen Rippen verstärkt ist. Jeder Spann-Halter 27 ist bei jedem der beiden in der Längsrichtung des Kanals 5 verlaufenden Längsränder des Auflageabschnitts 27a mit Rastmitteln 27c versehen, die zum Beispiel durch je einen Rastarm gebildet sind. Jeder Rastarm hat einen mit dem Auflageabschnitt 27a zusammenhängenden, vom Auflageabschnitt weg nach oben verlaufenden, inneren Schenkel, einen an dessen oberes Ende ausschliessenden, gebogenen Scheitel und einen von diesem weg nach unten verlaufenden, äusseren Schenkel. Der äussere Schenkel ist dabei wesentlich länger als der innere Schenkel, erstreckt sich bis unter den Auflageabschnitt 27a und ist zum grössten Teil nach unten vom jeweils anderen Rastarm weg nach aussen geneigt, hat jedoch an seinem unteren Ende einen kurzen, ungefähr vertikalen Endabschnitt. Mindestens ein Teil jedes Rastarms ist elastisch deformierbar und federnd, wobei insbesondere der gebogene Scheitel jedes Rastarms etwas dünner als dessen restlichen Teile und gut elastisch biegbar ist. Der innere Schenkel, der Scheitel und der äussere obere Bereich des äusseren Schenkels sind durch ein Loch oder eine Ausnehmung in zwei Teile unterteilt. Im Übrigen könnten die Rastmittel auf jeder der beiden Seiten des Auflageabschnitts zwei oder mehr vollständig voneinander durch Zwischenräume getrennte Rastarme aufweisen.

Jeder Spann-Halter 27 hat bei beiden quer zur Längsrichtung des Kanals 5 verlaufenden Querrändern einen sich unterhalb der Auflagefläche 27b befindender, von dieser in einem kleinen Abstand stehenden Halteabschnitt 27d, der einen leistenförmigen, vorstehenden Vorsprung oder Absatz bildet. Der sich in den Figuren 2, 3 und 7 auf der linken Seite der beiden Spann-Halter befindende Halteabschnitt 27d wird im Folgenden als erster Halteabschnitt 27d bezeichnet. Der sich in den Figuren 2, 3 und 7 rechts befindende Halteabschnitt 27d wird als zweiter Halteabschnitt bezeichnet. Jeder Halteabschnitt 27d ist mit einer quer zum Kanal verlaufenden Reihe von Halte-Einschnitten 27e versehen. Diese dringen in einer mit der Kanal-Längsrichtung einen mindestens annähernd rechten Winkel bildenden, also ungefähr vertikalen Richtung vollständig durch den Halteabschnitt 27d hindurch und sind durch vom Auflageabschnitt 27a wegragende, mindestens stellenweise deformierbare Laschen 27f seitlich begrenzt sowie voneinander getrennt. Wie es in den Figuren 6, 7, 8 und besonders deutlich in den Figuren 11 und 12 ersichtlich ist, haben die Halte-Einschnitte 27e im Grundriss einen sich von ihrer Mündung weg nach innen trichterartig verengenden Mündungsabschnitt 27g, an den ein kurzer, sich erweiternder Übergangsabschitt anschliesst, der zusammen mit dem Mündungsabschnitt eine Einschnürung bildet. Auf diese folgt ein im Grundriss U-förmiger Innenabschnitt 27h. Dieser hat einen durch zwei ebene, vertikale, zueinander parallele Flächen begrenzten Teilabschnitt, an den stetig ein im Grundriss halbkreisförmiger Grund 27k anschliesst. Die Laschen 27f haben an ihren freien Enden einen die Mündungsabschnitte 29g der Halte-Einschnitte 27e begrenzenden Kopf 27m, der sich im Grundriss und zum Auflageabschnitt 27a hin zuerst keilförmig erweitert, dann wieder verjüngt und über einen elastisch biegbaren, federnden Hals mit dem Auflageabschnitt 27a zusammenhängt.

Die Halte-Einschnitte 27e und Laschen 27f sind bei den zwei Halteabschnitten 27d jedes Spann-Halters 27 ein wenig verschieden voneinander ausgebildet. Wie es in den Figuren 4, 9 und 11 ersichtlich ist, werden die Köpfe 27m der beim ersten Halteabschnitt 27d vorhandenen Laschen 27f von oben nach unten etwas schmäler. Dementsprechend werden die durch die Köpfe 27m begrenzten Bereiche der Halte-Einschnitte 27e und insbesondere die Mündungsabschnitte 27g der letzteren beim ersten Halteabschnitt 27d von oben nach unten etwas breiter. Dagegen sind die im Grundriss U-förmigen Innenabschnitte 27h der Halte-Einschnitte von oben bis unten gleich breit. Beim zweiten Halteabschnitt 27d ist die Ausbildung der Mündungs- und Übergangsabschnitte der Halte-Einschnitte 27e und der Körper 27m der Laschen 27f gerade umgekehrt. Wie es aus den Figuren 5, 10 und 12 ersichtlich ist, werden nämlich die Köpfe 27m der Laschen 27f beim zweiten Halteabschnitt von oben nach unten breiter und die von den Köpfen 27m begrenzten Mündungsabschnitte 27g sowie Übergangsabschnitte der Halte-Einschnitte 27e dementsprechend von oben nach unten schmäler.

Die Breiten der engsten Stellen der genannten Einschnürungen der Halte-Einschnitte 27e sind ein wenig kleiner als die Aussendurchmesser der isolierenden Mäntel der Leiter 17. Dagegen sind die Breiten der Innenabschnitte 27h der Halte-Einschnitte 27e ungefähr gleich den Aussendurchmessern der isolierenden Mäntel der Leiter 17 und nämlich zum Beispiel geringfügig grösser als diese Aussendurchmesser. Der Radius des Grunds 27k der Halte-Einschnitte 27e ist dementsprechend ungefähr gleich dem Aussenradius der isolierenden Mäntel oder geringfügig grösser als dieser Radius. Die im Grundriss gemessene Tiefe oder Länge der Innenabschnitte 27h der Einschnitte ist so bemessen, dass ein Leiter 17 im Querschnitt mit höchstens kleinem Spiel in einen Innenabschnitt 27h hineinpasst. Im Übrigen hat jeder Halteabschnitt 27d vorzugsweise mindestens fünf und beispielsweise neun mit Nummern bezeichnete Halteabschnitte 27e.

Der Auflageabschnitt 27a hat in der Nähe der Halte-Einschnitte 27e des ersten Halteabschnitts 27d für jeden Halte-Einschnitt ein diesem zugeordnetes Sackloch 27p, dessen Mündungsöffnung sich auf der unteren, der Auflagefläche 27b abgewandten Seite des Auflageabschnitts 27a befindet. Die Durchmesser der Sacklöcher 27p sind ungefähr gleich gross wie die Aussendurchmesser der isolierenden Mäntel der Leiter 17 und nämlich zum Beispiel geringfügig grösser als diese Aussendurchmesser, so dass die Leiter mit kleinem Spiel in die Sacklöcher 27p gesteckt werden können.

Jeder Spann-Halter 27 hat eine Form, die im Wesentlichen und beispielsweise vollständig symmetrisch zu einer LängsMittelebene ist, die im montierten Zustand des Spann-Halters in der Längsrichtung des Trag-Kanals 5 in der Mitte des Spann-Halters zwischen den beiden Rastarmen der Rastmittel 27c durch den Auflageabschnitt 27a hindurch verläuft. Dagegen ist jeder Spann-Halter 27 nur weitgehend, aber nicht vollständig symmetrisch bezüglich einer Quer-Mittelebene, die in montiertem Zusand des Spann-Halters rechtwinklig zur Längsrichtung des Trag-Kanals 5 durch die Mitte des Spann-Halters verläuft. Wie schon beschrieben sind nämlich die Halte-Einschnitte 27e und Laschen 27f des ersten Halteabschnitts 27d und des zweiten Halteabschnitts 27d etwas verschieden voneinander. Ferner ist der Auflageabschnitt 27a nur auf derjenigen Seite der Quer-Mittelebene, die den ersten Halteabschnitt 27d aufweist, mit Sacklöchern 27p versehen.

Die beiden Spann-Haltevorrichtungen 21 und 23 weisen noch Sicherungsmittel auf, um die beiden Spann-Halter 27 nach dem Einsetzen in den Kanal zumindest gegen zueinander hin gerichtete Verschiebungen und nämlich auch noch gegen voneinander weg gerichtete Verschiebungen zu sichern. Die Sicherungsmittel weisen für den ersten und zweiten Spann-Halter 27 je ein in den Figuren 2 bis 5 und separat in der Fig. 13 ersichtliches, erstes bzw. zweites Sicherungsorgan 31 auf. Die beiden Sicherungsorgane 31 sind - abgesehen von den zusätzlichen Zubehörteilen - beispielsweise identisch ausgebildet. Jedes Sicherungsorgan hat einen ebenen Mittelabschnitt 31a und zwei von dessen Längsrändern weg nach unten ragende und nach unten etwas voneinander weg nach aussen geneigte Schenkel 31b. Der Mittelabschnitt 31a hat zwei Löcher 31c, die durch nach unten vorstehende, durch Umformen gebildete Krägen etwas verlängert sind und Innengewinde haben. Jeder Schenkel 31b hat zwei zum jeweils andern Schenkel hin vorstehende Lappen, die je einen Anschlag 31d bilden. Der Zwischenraum zwischen den beim gleichen Schenkel 31b angeordneten Anschläge 31d ist mindestens gleich der in der Längsrichtung des Trag-Kanals 5 gemessene Länge der Rastarme 27c und beispielsweise ein wenig grösser als diese Länge, so dass die Rastarme - mit etwas Spiel in der Kanal-Längsrichtung - zwischen den Anschlägen Platz haben. Der Mittelabschnitt 31a ist ferner noch mit einer mehrfach abgewinkelten, von ihm weg nach unten ragenden Lasche 31f versehen, die ein Loch 31g hat. Ferner ist am einen Ende des Mittelabschnitts 31a ein von diesem durch einen Spalt getrennter Steg 31h vorhanden, der etwas nach unten ausgebuchtet ist und zwei Löcher 31i hat.

In die Innengewinde der Löcher 31c sind in den Figuren 2, 3 und 4 ersichtliche, zu den Sicherungsmitteln gehörende Schrauben 33 eingeschraubt. Ferner ist mindestens bei der zweiten Spann-Haltevorrichtung 23 eine in Fig. 3 sichtbare, das Loch 31g der Lasche 31f durchdringende Schraube 37 vorhanden, die zusammen mit der Lasche 31f und einem Klemmstück eine Erdungsanschluss-Klemme 35 bildet. Mindestens bei dem zur zweiten Spann-Haltevorrichtung 23 gehörenden, zweiten Sicherungsorgan 31 ist noch eine Zugentlastungs-Klemme 38 in den Löchern 31i des Stegs 31h fixiert.

Der bzw. jeder Stütz-Halter 25 kann zum Beispiel gleich ausgebildet sein wie die beiden Spann-Halter 27. Da ein Stütz-Halter bei der fertigen Lichtband-Leuchteinrichtung im Gegensatz zu den Spann-Haltern keine in der Kanallängsrichtung gerichtete Zugkräfte aufnehmen muss, braucht er nicht unbedingt durch ein Sicherungsorgan 31 gegen Längsverschiebungen gesichert zu werden. Damit ein Stütz-Halter sich beim noch näher beschriebenen Einsetzen und Spannen der Leiter 17 nicht übermässig verschiebt, kann er beispielsweise, wie in Figur 1 dargestellt, auf der dem ersten Kanalende 5a zugewandten Seite eines zwei Profilstäbe 9 des Kanals verbindenden Verbindungsstücks 11 angeordnet werden und dann am Verbindungsstück 11 anstehen, so dass das letztere den Stütz-Halter gegen vom ersten Kanalende weggerichtete Verschiebungen sichert.

Nun werden die Herstellung und/oder Installation der Lichtband-Leuchteinrichtung 3 und noch einige weitere Teile und Merkmale dieser Einrichtung beschrieben. Bei der Installation wird zunächst der Trag-Kanal 5 an der Decke 1 montiert, beispielsweise pendelnd aufgehängt. Ferner wird vor oder nach der Montage des Trag-Kanals 5 an der Decke bei jedem der beiden Kanalenden 5a, 5b eines der Sicherungsorgane 31 durch die am betreffenden Kanalende vorhandene End-Öffnung des Kanals in diesen eingeschoben, so dass die beiden Schenkel 31b jedes Sicherungsorgans 31 auf den oberen, inneren Flächen der beiden Flansche 9e des den betreffenden Kanal-Endabschnitt bildenden Profilstab 9 aufstehen und der Mittelabschnitt 31a des Sicherungsorgans 31 mindestens annähernd an der Vertiefung 9b des Profilstabs 9 anliegt. Das zur ersten Spann-Haltevorrichtung 21 gehörende, erste Sicherungsorgan 31 wird dabei gemäss Fig. 2 derart in den Trag-Kanal 5 eingesetzt, dass sich die die Schrauben haltende Löcher 31c, die zur Bildung einer Erdungsanschluss-Klemme dienende Lasche 31f und der Steg 31h des Sicherungsorgans 31 zwischen dem ersten Kanalende 5a und dem ersten Spann-Halter 27 und also auf der dem zweiten Kanalende 5b und der zweiten Spann-Haltevorrichtung 23 abgewandten Seite des ersten Spann-Halters 27 befinden. Das zur zweiten Spann-Haltevorrichtung 23 gehörende, zweite Sicherungsorgan 31 wird gemäss Fig. 3 derart in den Kanal eingesetzt, dass sich die die Schrauben 33 haltenden Löcher 31c, die Lasche 31f mit den restlichen Teilen der Erdungsausschluss-Klemme 35 und der zum Halten der Zugentlastungs-Klemme 38 dienenden Steg 31h des Sicherungsorgans 31 auf der rechten, dem ersten Kanalende 5a sowie der ersten Spann-Haltevorrichtung 21 abgewandten Seite des zweiten Spann-Halters 27 zwischen diesem und dem zweiten Kanalende 5b befinden. Bei der ersten Spann-Haltevorrichtung 21 wird nachher weder eine Erdungsanschluss-Klemme noch eine Zugentlastungs-Klemme benötigt, so dass das erste Sicherungsorgan 31 eventuell ohne Zugentlastungs-Klemme und/oder ohne die zusammen mit der Lasche 31f eine Erdungsanschluss-Klemme bildenden Teile montiert werden kann. Wenn die beiden Sicherungsorgane 31 beim ersten bzw. zweiten Kanalende in den Kanal eingeschoben wurden, werden sie durch Festdrehen der Schrauben 33 unbewegbar im Kanal festgeklemmt.

Die Längsöffnung 5c des Kanals 5 ist nach dem Einsetzen der Sicherungsorgane 31, aber vor dem Montieren der Spann-Halter 27, Stütz-Halter 25 und Leuchtvorrichtungen 13 über die ganze Länge des Kanals offen. Zum Einbringen der Leiter 17 in den Kanal 5 kann ein Installateur die Leiter 17, beispielsweise einen nach dem anderen, beim einen, ersten Ende der Leiter in den Figuren 2 und 4 dargestellten Weise, aber bei noch vom Kanal getrenntem, erstem Spann-Halter 27 zugfest mit dem ersten Spann-Halter 27 der ersten Spann-Haltevorrichtung 21 verbinden. Der Installateur kann hierzu das erste Ende eines Leiters 17 in eines der Sacklöcher 27p stecken, den Leiter 17 danach zunächst um einen ungefähr rechten Winkel scharf abbiegen und/oder abwinkeln, so dass der Leiter 17 mindestens stellenweise und/oder mindestens annähernd an den unteren Flächen des Mittelabschnitts 27a sowie des ersten Halteabschnitts 27d anliegt, den Leiter nochmals um ungefähr einen rechten Winkel scharf abbiegen und/oder abwinkeln und einen Abschnitt des Leiters durch den Mündungsabschnitt 27g sowie die Einschnürung des dem betreffenden Sackloch 27p zugeordneten Halter-Einschnitts 27d hindurch in den Innenabschnitt 27h des Halte-Einschnitts 27d hineinziehen. Die beiden diesen Halte-Einschnitt seitlich begrenzenden Laschen 27f werden dabei vorübergehend unter einer elastischen Deformation gespreizt und halten den Leiter dann im Halte-Einschnitt. Danach kann der Installateur den Leiter wieder um ungefähr einen rechten Winkel um den sich oberhalb des ersten Halteabschnitts 27d befindenden Querrand des Auflageabschnitts 27a herum scharf abbiegen und/oder abwinkeln, so dass der Leiter mindestens stellenweise auf der Auflagefläche 27b des ersten Spann-Halters 27 aufliegt.

Wenn alle vorgesehenen Leiter 17 in dieser Weise mit dem ersten Spann-Halter 27 verbunden sind, kann der Installateur diesen Spann-Halter in der Nähe des ersten Kanalendes 5a von unten her unter einer vorübergehenden elastischen Deformation der Rastarme 27c derart durch die Längsöffnung 5c des Trag-Kanals 5 hindurch in dessen Innenraum einsetzen, dass die Auflageflächen 27b auf der oberen Seite des Spann-Halters befindet und dass die zwei Rastarme 27c zwischen die vier Anschläge 31d des Sicherungsorgans gelangen. Die Rastarme rasten dann im Trag-Kanal ein, so dass sie mit ihren unteren Enden auf den oberen Flächen der beiden Flansche 9e des Kanals aufstehen und den Halter gegen ein Herausfallen aus dem Kanal sichern. Ferner sichern die Anschläge 31d des ersten Sicherungsorgans 31 den ersten Spann-Halter 27 sowohl gegen zum zweiten Spann-Halter 27 hin als auch gegen von diesem weg gerichtete Verschiebungen in der Längsrichtung des Kanals. Der erste Spann-Halter wird also nach dem Einsetzen in den Kanal 5 mit etwas Spiel in diesem gehalten, aber in allen Richtungen gegen grössere Bewegungen gesichert. Der erste Spann-Halter wird im Übrigen gemäss Figur 2 derart in den Kanal eingesetzt, dass sein erster, die Leiter 17 haltender Halteabschnitt 27d sich auf der dem zweiten Kanalende 5b und zweiten Spann-Halter abgewandten Seite des ersten Spann-Halters befindet.

Der Installateur kann nun die vom ersten Spann-Halter 27 durch die Längsöffnung 5c des Trag-Kanals 5 hindurch nach unten hängende Leiter 17 anheben und entlang dem Kanal in dessen Innenraum einbringen. Wenn der Kanal länger als etwa 5 m bis 10 m ist, kann der Installateur die in den Kanal eingebrachten Abschnitte der Leiter mit einem Stütz-Halter 25 oder sukzessive mit mehreren, entlang dem Kanal mit Abstand aufeinander folgenden Stütz-Haltern 25 abstützen. Der bzw. jeder Stütz-Halter 25 wird von unten her durch die Längsöffnung 5c eines Profilstabs 9 des Kanals 5 in diesen eingesetzt und im Kanal eingerastet. Der Abstand der entlang dem Kanal aufeinander folgenden Spann-Halter und Stütz-Halter beträgt vorzugsweise mindestens 2 m, vorzugsweise höchstens 8 m und zum Beispiel ungefähr 4 m bis 6 m. Wie schon erwähnt, können die Stütz-Halter zum Beispiel jeweils auf der einen Seite eines Verbindungsstückes 11 in den Kanal eingesetzt werden.

Wenn die Leiter 17 bis annähernd zum zweiten Kanalende 5b in den Kanal 5 eingebracht sind, wird der zweite Spann-Halter 27 beim zweiten Sicherungsorgan 31 unter den Leitern 17 in den Kanal eingesetzt, so dass er sich gemäss den Figuren 3 und 5 im Kanal befindet. Das Einsetzen des zweiten Spann-Halters erfolgt dabei analog, wie es für den ersten Spann-Halter beschrieben wurde, so dass der zweite Spann-Halter 27 im Kanal einrastet und durch das zweite Sicherungsorgan 31 gegen zum ersten Spann-Halter hin sowie gegen von diesem weggerichteten Verschiebungen in der Längsrichtung des Kanals gesichert wird. Der zweite Halteabschnitt 27d des zweiten Spann-Halters befindet sich dann auf der dem ersten Kanalende 5a und dem ersten Spann-Halter abgewandten Seite des zweiten Spann-Halters.

Die Leiter 17 liegen dann zum Beispiel zunächst lose auf dem Auflageabschnitt 27a des zweiten Spann-Halters auf. Der Installateur kann nun einen Leiter 17 nach dem anderen mit einer Hand spannen und mit dem zweiten Spann-Halter 27 verbinden. Der Installateur kann dazu jeweils einen Leiter mit einer Hand fassen, durch Ziehen mehr oder weniger stark spannen, um einen ungefähr rechten Winkel um den sich oberhalb des zweiten Halteabschnitts 27d befindenden Querrand des Auflageabschnitts herum scharf abbiegen und/oder abwinkeln und durch den Mündungsabschnitt 27g eines Halte-Einschnitts 27e hindurch in den Innenabschnitt 27h des Halte-Einschnitts hineinziehen. Dabei werden die den betreffenden Halte-Einschnitt begrenzenden Laschen 27f wiederum vorübergehend gespreizt. Nach dem Hineinziehen eines Leiters in den vorgesehenen Halter-Einschnitt, kann der unten aus dem Halte-Einschnitt herausragende Abschnitt des Leiters auf der unteren Seite des Einschnitts nochmals um einen ungefähr rechten Winkel abgebogen und/oder abgewinkelt werden, so dass er im Kanal weiter gegen dessen zweites Ende 5b verläuft.

Unter dem Mittelabschnitt eines Leiters 17 wird im Folgenden derjenige Abschnitt eines Leiters verstanden, der sich teils oberhalb der Auflageabschnitte 27a der beiden Spann-Halter und zum grössten Teil zwischen den beiden Spann-Haltern befindet. Wenn alle Leiter 17 gespannt und mit dem zweiten Spann-Halter 27 verbunden wurden, befindet sich der Mittelabschnitt jedes Leiters mindestens zu einem grossen Teil und beispielsweise vollständig im Innenraum des Kanals und liegt bei seinen Enden zwischen den Mittelabschnitten 31a der Sicherungsorgane 31 und den beiden Spann-Haltern 27 stellenweise auf den Auflageflächen 27b der beiden Spann-Halter auf. Falls zwischen den beiden Spann-Haltern 27 noch mindestens ein Stütz-Halter 25 im Trag-Kanal 5 montiert wurde, liegen die Leiter auch auf der Auflagefläche des bzw. jedes Stütz-Halters auf. Der Mittelabschnitt jedes entlang dem Kanal verlaufenden Leiters 17 ist dann abhängig von dessen Spannung mindestens zum grössten Teil mindestens annähernd gerade sowie beispielsweise mindestens ungefähr parallel zur Längsrichtung des Kanals und/oder zwischen den einander benachbarten Haltern leicht gebogen und ein wenig nach unten hängend. Jeder Leiter 17 ist also bei jedem Spann-Halter zwischen dem Mittelabschnitt des Leiters und dem den Leiter haltenden Halte-Einschnitt um einen ungefähr rechten Winkel um einen Querrand des Auflageabschnitts 27a des Halters herum scharf abgebogen und/oder abgewinkelt. Diese Querränder der Auflageabschnitte können zum Beispiel ein wenig abgerundet sein, wobei aber der Krümmungsradius vorzugsweise nur klein und beispielsweise höchstens ungefähr 1 mm ist. Ferner ist jeder Leiter bei jedem Spann-Halter auf der unteren Seite der Halte-Einschnitte ebenfalls noch um einen Randbereich des vom Leiter durchdrungenen Halte-Einschnitts herum scharf abgebogen und/oder abgewinkelt. Beim ersten Spann-Halter 27 sind die Leiter zudem auch noch bei den Mündungen der Sacklöcher 27p um Randabschnitte von diesen herum scharf abgebogen und/oder abgewinkelt. Infolge dieser Abbiegungen und/oder Abwinkelungen der Leiter bei den Haltern werden die Leiter zugfest mit den Haltern verbunden, obschon jeder einen Innenabschnitt 27h einen Halte-Einschnitt 27e durchdringende Abschnitt eines Leiters 17 im genannten Innenabschnitt 27h - in einem Querschnitt durch den Leiter - eventuell etwas Spiel hat. Die Mittelabschnitte der Leiter bleiben nach dem Spannen der Leiter dauernd mehr oder weniger stark gespannt.

Wie beschrieben, erweitern sich die von den Köpfen 27m begrenzten Abschnitte der Halte-Einschnitte beim ersten Halte-Abschnitt 27d der Spann-Halter von unten nach oben und beim zweiten Halte-Abschnitt von oben nach unten. Dies erleichtert das beim ersten Halteabschnitt 27d des ersten Spann-Halters 27 von unten nach oben und beim zweiten Halteabschnitt 27d des zweiten Spann-Halters 27 des zweiten Spann-Halters 27 von oben nach unten erfolgende Hineinziehen der Leiter in die Halte-Einschnitte.

Die allenfalls vorhandenen Stütz-Halter 25 stützen die auf ihnen aufliegenden Leiter schon beim Einbringen von diesen in den Trag-Kanal verschiebbar ab und verhindern beim Einbringen der Leiter 17 in den Kanal, dass die Leiter 17 vor dem Spannen zwischen den beiden Spann-Haltern allzu weit nach unten hängen. Dies verkleinert die zum Spannen nötige Kraft, so dass die Leiter eben ohne Weiteres in der beschriebenen Weise mit einer Hand gespannt werden können. Ferner stützen die Stütz-Halter die Leiter 17 dann natürlich auch nach dem Spannen der Leiter ab und verkleinern die durch das Gewicht der Leiter auf die Spann-Halter ausgeübte Zugkraft.

Die im Kanal eingesetzten Leiter 17 können zum Beispiel einen Erd-Leiter, einen Null-Leiter und drei Phasen-Leiter umfassen. Wenn die Leiter 17 im Trag-Kanal installiert und gespannt sind, können die Leuchtvorrichtungen 13 eine nach dem andern am Trag-Kanal 5 montiert und je elektrisch leitend mit dem Erd-Leiter, dem Null-Leiter und einem der Phasen-Leiter verbunden werden. Zum Verbinden eines Leiters 17 mit einer Leuchtvorrichtung 13 kann jeweils eine Abzweig-Klemme 39, von denen eine in Fig. 2 dargestellt ist, mit einem Leiter 17 verbunden werden. Jede Abzweig-Klemme 39 kann zum Beispiel ein elektrisch isolierendes, am Leiter 17 anklemmbares Gehäuse und einen in diesem angeordneten metallischen, elektrisch leitenden Schneidkontakt aufweisen, der beim Anklemmen des Gehäuses am Leiter 17 dessen isolierenden Mantel aufschneidet und in Kontakt mit dem leitenden Kern, d.h. Draht, des Leiters gelangt. Die Abzweig-Klemme 39 kann zum Beispiel durch eine Abzweig-Leitung 41 mit einem lösbar in die Abzweig-Klemme 39 steckbaren Stecker elektrisch leitend mit der Leuchtvorrichtung verbunden werden. Geeignete Abzweig-Klemmen wurden in der europäischen Patentanmeldung 04 405 111.8 vorgeschlagen.

Die Leiter 17 können ferner in der Nähe des zweiten Spann-Halters 27 mit einer in Fig. 3 angedeuteten Stromzuleitung verbunden werden. Diese weist einen Erd-Leiter 47 und vier sonstige Leiter auf, die einen Null-Leiter sowie drei Phasen-Leiter umfassen und von denen einer mit 45 bezeichnet ist. Die Leiter 45, 47 sind mit der Zugentlastungs-Klemme 38 zugfest am zweiten Sicherungsorgan 31 gehalten. Die Leiter 45 sind über eine zum Teil in Fig. 3 dargestellte Verbindungs-Klemme 49 mit je einem der Leiter 17 verbunden. Der Erd-Leiter 47 ist elektrisch leitend mit der Erdungsanschluss-Klemme 35 der zweiten Spann-Haltevorrichtung 23 und über diese mit dem metallischen Profilstäben des Kanals 5 und ferner ebenfalls noch mit einem der Leiter 17 verbunden.

Die Leiter 17 und die zum Halten von diesen dienenden Spann-Haltevorrichtungen 21, 23 sowie die allenfalls erforderlichen Stütz-Halter 27 können in der beschriebenen Weise einfach und mit geringem Arbeitsaufwand in den Trag-Kanal eingebracht werden. Dabei ist es insbesondere von Vorteil, dass bei gegebener Länge des Kanals wesentlich weniger Halter an diesem montiert werden müssen als bei den bekannten Lichtband-Einrichtungen, bei denen alle Halter die Leiter lediglich verschiebbar abstützen. Nach dem Spannen der Leiter 17, halten die Spann-Halter 27 der beiden Spann-Haltevorrichtungen 21, 23 und die Stütz-Halter die Leiter 17 trotz der geringen Anzahl Halter im Kanal und verhindern bereits vor der Montage der Leuchtvorrichtungen, dass die Leiter durch die Längsöffnung des Kanals 5 aus diesem Herausfallen oder zwischen den beiden Spann-Haltevorrichtungen 21, 23 aus dem Kanal heraushängen. Dies ermöglicht wiederum, dass auch die Leuchtvorrichtungen ohne Behinderung durch die Leiter 17 am Kanal montiert und schnell und einfach leitend mit den Leitern verbunden werden können. Ferner werden die Enden der Leiter 17 der ersten Spann-Haltevorrichtung 21 durch deren Spann-Halter 27 ohne zusätzlich separate Isoliermittel elektrisch gegen die Umgebung isoliert.

Ferner verlaufen die Leiter 17 der erfindungsgemässen Einrichtung zwischen den beiden Spann-Haltern 27 und den allenfalls vorhandenen Stütz-Haltern 25 mehr oder weniger frei und insbesondere unbefestigt durch den Innenraum des Tragkanals. Dies im Gegensatz zu den Leitern der aus der FR 1 398 249 A und der DE 101 40 707 A bekannten Einrichtungen, bei denen die Leiter im Wesentlichen entlang der ganzen Länge der Kanäle an diesen angeklemmt sind. Bei der erfindungsgemässen Einrichtung sind die Leiter 17 vor dem Montieren der Leuchtvorrichtungen 13 zwischen den Haltern 25, 27 auch überall gut von unten her durch die Längsöffnung 5c des Trag-Kanals 5 zugänglich. Ein Installateur kann daher an nahezu jeder beliebigen Stelle des Trag-Kanals 5 - nämlich an jeder gewünschten, sich zwischen Haltern 25, 27 befindenden Stelle des Trag-Kanals - einfach und mühlos eine Abzweig-Klemme 39 an einen Leiter 17 anklemmen und diesen dadurch leitend mit einer Leuchtvorrichtung oder eventuell einer anderen elektrischen Vorrichtung verbinden.

Die Einrichtung und das Verfahren können auf verschiedene Weisen modifiziert werden. Man könnte beispielsweise die identisch wie die Spann-Halter 27 ausgebildeten Stütz-Halter 25 durch Stütz-Halter ersetzen, die aus einem federnden Bügel ohne Halte-Einschnitte 27d und ohne Sacklöcher 27p bestehen. Ferner könnte man Spann-Halter vorsehen, die je nur einen Halteabschnitt mit Halte-Einschnitten aufweisen. Zudem könnte man die Sacklöcher 27p beim zweiten Spann-Halter weglassen. Eventuell könnte man sogar die Halte-Einschnitte beim ersten und/oder zweiten Spann-Halter durch durchgehende Halte-Löcher ersetzen, durch welche dann die Leiter hindurch gesteckt werden. Des Weiteren könnte man beim ersten Sicherungsorgan die Lasche 31f für die bei der ersten Spann-Haltevorrichtung 21 nicht benötigte Erdungsanschluss-Klemme und den Steg 31h zum Halten der ebenfalls nicht benötigten Zugentlastungs-Klemme weglassen. Ferner könnte man Sicherungsorgane vorsehen, die nur einen Anschlag oder nur zwei Anschläge aufweisen und die Spann-Halter nur gegen zueinander hin gerichtete Verschiebungen sichern. Des Weiteren könnte man die Sicherungsorgane 31 und Schrauben 33 beispielsweise durch Schrauben ersetzen, welche direkt Löcher der Spann-Halter 27 durchdringen und diese am Kanal festklemmen oder in Gewindebohrungen des Kanals eingeschraubt sind.

## Patentansprüche

1. Verfahren zur Herstellung und/oder Installation einer elektrischen Einrichtung (3) mit einem eine Längsöffnung (5c) aufweisenden Kanal (5), isolierten elektrischen Leitern (17) und Haltern (25, 27), wobei die Leiter (17) in den Kanal (5) eingebracht und mittels der Halter (25, 27) im Kanal (5) gehalten und gegen ein Herausfallen durch die Längsöffnung (5c) gesichert werden, **dadurch gekennzeichnet, dass** zwei Spann-Halter (27) umfassende Halter (25, 27) verwendet werden, die im Kanal (5) mindestens gegen zueinander hin gerichteten Verschiebungen gesichert werden, und dass die Leiter (17) zwischen den beiden Spann-Haltern (27) gespannt und mit diesen verbunden werden.

2. Verfahren nach Anspruch 1, **dadurch gekennzeichnet, dass** jeder der beiden verwendeten Spann-Halter (27) Halte-Einschnitte (27e) und/oder Halte-Löcher aufweist und dass jeder Leiter (17) bei jedem der beiden Spann-Halter (27) durch einen der Halte-Einschnitte (27e) oder eines der Halte-Löcher hindurch geführt und zwischen diesem und einem im Allgemeinen ungefähr in der Längsrichtung des Kanals (5) zum jeweils anderen Spann-Halter (27) hin verlaufenden Mittelabschnitt des Leiters (17) um mindestens einen Rand des Spann-Halters (27) herum gebogen und/oder abgewinkelt wird.

3. Verfahren nach Anspruch 2, **dadurch gekennzeichnet, dass** die Leiter (17) unter vorübergehenden elastischen Deformationen von die Halte-Einschnitte (27e) seitlich begrenzenden Laschen (27f) der Spann-Halter (27) durch Einschnürungen der Halte-Einschnitte (27e) hindurch in Innenabschnitte (27h) der Halte-Einschnitte (27e) hineinbewegt werden, wobei die Leiter (17) vorzugsweise auch um Ränder der Spann-Halter (27) herum abgebogen und/oder abgewinkelt werden, die sich auf den weiter vom Mittelabschnitt der Leiter (17) entfernten Seiten der Halte-Einschnitte (27e) befinden

4. Verfahren nach Anspruch 2 oder 3, **dadurch gekennzeichnet, dass** die verwendeten Spann-Halter (27) einen ersten und einen zweiten Spann-Halter (27) umfassen, dass mindestens der erste Spann-Halter (27) einen mit den Halte-Einschnitten (27e) oder den Halte-Löchern und mit Sacklöchern (27p) versehenen Körper aus elektrisch isolierenden Kunststoff aufweist, dass die verwendeten Leiter (17) einadrig sind und je ein erstes Ende sowie ein zweites Ende aufweisen und dass das erste Ende der Leiter (17) je in eines der Sacklöcher (27p) des ersten Spann-Halters (27) gesteckt wird.

5. Verfahren nach einem der Ansprüche 1 bis 4, dass der verwendete Kanal (5) zwei Seitenwände (9d) aufweist, von denen jede einen zur jeweils andern Seitenwand (9d) hin vorstehenden Flansch (9e) aufweist, dass die einander zugewandten Längsränder der beiden Flansche (9e) die Längsöffnung (5c) des Kanals (5) begrenzen, dass jeder verwendete Spann-Halter (27) mindestens zwei einander gegenüberstehende Rastarme (27c) hat, dass die Spann-Halter (27) derart durch die Längsöffnung (5c) des Kanals (5) hindurch in diesen eingesetzt werden, dass die Rastarme (27c) im Innern des Kanals (5) bei den Flanschen (9e) einrasten und den Spann-Halter (27) gegen ein Herausfallen durch die Längsöffnung (5c) des Kanals (5) sichern und dass die Spann-Halter (27) durch Sicherungsmittel im Kanal (5) gegen zueinander hin gerichtete Verschiebungen gesichert werden, wobei die Sicherungsmittel beispielsweise Sicherungsorgane (31) aufweisen, die vor dem Einsetzen der Spann-Halter (27) in den Kanal (5) in diesem befestigt werden und je mindestens einen mit dem zugeordneten Spann-Halter (27) zusammenwirkenden Anschlag (31d) haben.

6. Verfahren nach einem der Ansprüche 1 bis 5 **dadurch gekennzeichnet, dass** die Leiter (17) zwischen den beiden Spann-Haltern (27) mit mindestens einem Stütz-Halter (25) im Kanal (5) abgestützt werden, wobei der Abstand der entlang dem Kanal (5) aufeinander folgenden Halter (25, 27) vorzugsweise mindestens 2 m und vorzugsweise höchstens 8 m beträgt und wobei der bzw. jeder verwendete Stütz-Halter (25) beispielsweise gleich ausgebildet ist wie die Spann-Halter (27), aber die Leiter (11) lediglich verschiebbar abstützt.

7. Verfahren nach einem der Ansprüche 1 bis 6, **dadurch gekennzeichnet, dass** die Leiter (17) zwischen den beiden Spann-Haltern (27) elektrisch leitend mit elektrischen Vorrichtungen, beispielsweise Leuchtvorrichtungen (13) und/oder Steckdosen, verbunden werden.

8. Verfahren nach einem der Ansprüche 1 bis 7, **dadurch gekennzeichnet, dass** die Leiter (17) zwischen den beiden Spann-Haltern (27) und/oder zwischen diesen und mindestens einem allenfalls noch vorhandenen, die Leiter (17) zwischen den Spann-Haltern (27) abstützenden Stütz-Halter (25) und/oder zwischen allenfalls entlang dem Kanal (5) aufeinander folgenden Stütz-Haltern (25) vor dem Verbinden mit elektrischen Leuchtvorrichtungen (13) und/oder mit anderen elektrischen Vorrichtungen im Wesentlichen unbefestigt und frei durch einen Innenraum des Kanals (5) verlaufen.

9. Elektrische Einrichtung, insbesondere hergestellt und/oder installiert nach dem Verfahren gemäss einem der Ansprüche 1 bis 8, mit einem eine Längsöffnung (5c) aufweisenden Kanal (5), in dem isolierten elektrische Leiter (17) und diese im Kanal (5) haltende und gegen ein Herausfallen aus der Längsöffnung (5c) des Kanals (5) sichernde Halter (25, 27) angeordnet sind, **dadurch gekennzeichnet, dass** die Halter (25, 27) zwei Spann-Halter (27) umfassen, die mindestens gegen zueinander hin gerichtete Verschiebungen im Kanal (5) gesichert sind und die Leiter (17) zwischen sich zugfest halten und dass jeder Leiter (17) einen zwischen den beiden Spann-Haltern (27) gespannten Mittelabschnitt hat.

10. Halter für eine elektrische Einrichtung nach Anspruch 9, **dadurch gekennzeichnet, dass** er als Spann-Halter (27) zum zugfesten Halten der Leiter (17) ausgebildet ist.
